(19) Europäisches Patentamt
European Patent Office
Office européen des brevets

(11) EP 4 479 901 B1

(12) **EUROPEAN PATENT SPECIFICATION**

(45) Date of publication and mention of the grant of the patent:
**02.09.2026 Bulletin 2026/36**

(21) Application number: **23723155.0**

(22) Date of filing: **25.04.2023**

(51) International Patent Classification (IPC):
***G06N 20/00*** *(2019.01)* ***G05B 23/02*** *(2006.01)*
*G05B 17/02* *(2006.01)*

(52) Cooperative Patent Classification (CPC):
**G06N 20/00; G05B 23/024;** G05B 17/02

(86) International application number:
**PCT/EP2023/060782**

(87) International publication number:
**WO 2023/217526 (16.11.2023 Gazette 2023/46)**

(54) **PROVIDING A TRAINED CLASSIFICATION MODEL FOR A CLASSIFICATION TASK IN A PRODUCTION PROCESS**

BEREITSTELLUNG EINES TRAINIERTEN KLASSIFIKATIONSMODELLS FÜR EINE KLASSIFIKATIONSAUFGABE IN EINEM PRODUKTIONSPROZESS

FOURNITURE D’UN MODÈLE DE CLASSIFICATION FORMÉ POUR UNE TÂCHE DE CLASSIFICATION DANS UN PROCÉDÉ DE PRODUCTION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **13.05.2022 EP 22173229**

(43) Date of publication of application:
**25.12.2024 Bulletin 2024/52**

(73) Proprietor: **Siemens Aktiengesellschaft**
**80333 München (DE)**

(72) Inventors:
- **CHEN, Haokun**
  **81549 München (DE)**
- **FRIKHA, Ahmed**
  **81549 München (DE)**
- **KROMPASS, Denis**
  **85591 Vaterstetten (DE)**

(74) Representative: **Siemens Patent Attorneys**
**Postfach 22 16 34**
**80506 München (DE)**

(56) References cited:
**WO-A1-2021/177879**

- **ZHANG WEI ET AL: "Federated learning for machinery fault diagnosis with dynamic validation and self-supervision", KNOWLEDGE-BASED SYSTEMS, ELSEVIER, AMSTERDAM, NL, vol. 213, 24 December 2020 (2020-12-24), XP086464244, ISSN: 0950-7051, [retrieved on 20201224], DOI: 10.1016/J.KNOSYS.2020.106679**
- **MA SHIYAO ET AL: "Privacy-Preserving Anomaly Detection in Cloud Manufacturing Via Federated Transformer", IEEE TRANSACTIONS ON INDUSTRIAL INFORMATICS, IEEE SERVICE CENTER, NEW YORK, NY, US, vol. 18, no. 12, 13 April 2022 (2022-04-13), pages 8977 - 8987, XP011921627, ISSN: 1551-3203, [retrieved on 20220414], DOI: 10.1109/TII.2022.3167478**
- **YI LIU ET AL: "A Systematic Literature Review on Federated Learning: From A Model Quality Perspective", ARXIV.ORG, CORNELL UNIVERSITY LIBRARY, 201 OLIN LIBRARY CORNELL UNIVERSITY ITHACA, NY 14853, 1 December 2020 (2020-12-01), XP081828970**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

The present disclosure relates to a computer-implemented method for providing a trained classification model for a classification task in a production process for manufacturing at least one workpiece and/or product. Further, the disclosure relates to a corresponding computer-implemented method for controlling a production process and a computer program product.

Artificial Intelligence ("AI") systems, such as machine learning models, are known from the prior art. The machine learning models are software programs whose behavior is learned from data instead of being explicitly programmed. The learning process is called "training" which requires plenty of data and significant computational resources. Thereby, the trained machine learning model solves a specific task for which it was trained, such as prediction of machine or process properties. Unlike conventional software, the learned behavior of the machine learning models highly depends on the data including parameters used during training, namely training data.

In some industrial manufacturing environment, only small datasets of annotated data are available, which could be due to expensive data collection processes, e.g., high material costs for experiments in additive manufacturing, and timeconsuming manual data labelling, which often requires domain experts. Using insufficient data typically leads to a low performance of the data-driven approaches developed for a certain application.

In industrial manufacturing there exist a high diversity of manufacturing scenarios. For example, for a production process there can be used different machine types from many machine manufacturers. The production process may be performed with different settings of the machines or different sensor settings for collecting data from the machine. As an example, a camera is positioned in different angles to the monitored workpiece. Similarly, the wear of the tooling of the different machines as well as other production-related factors, e.g., changes in the manufacturing process, influence the distribution of the collected data from different clients. In result, the distribution of data recorded from the different manufacturing / production process scenarios differ. Such shifts in the data distributions typically lead to a degradation of the performance of the machine learning model developed for a certain production process. Traditional federated learning approach was conceived to securely aggregate knowledge between clients that have the same data distribution and fails for clients with different data distribution.

Traditional training methods of a machine learning models, especially a federated learning approach perform well on indomain data, i.e., data similar to the dataset they were trained with, they fail to generalize to out-of-domain data incurred by strong distribution shift. The distribution shift problem is also addressed by collecting data from the new distribution, e.g., from the new manufacturing machine, and labelling it, before training a new ML model or finetuning an existing ML model on it. This method has two drawbacks. First, in most cases only few labelled data are available, which are sampled randomly. The few data samples of a new unseen manufacturing scenario used to customize the adaptive learning model or even more used to customize an untrained learning model leads to a moderate performance of the model.

WO 2021/177879 A1 discloses a method of generating a synthetic training dataset for training a machine learning model using an original training dataset including a plurality of features. The synthetic training data is generated by selecting one feature of the original training dataset as a target vector, selecting the remaining features of the original training dataset as a set of training input vectors and training a prediction model.

MA SHIYAO ET AL: "Privacy-Preserving Anomaly Detection in Cloud Manufacturing Via Federated Transformer", IEEE TRANSACTIONS ON INDUSTRIAL INFORMATICS, IEEE SERVICE CENTER, NEW YORK, NY, US, vol. 18, no. 12, 13 April 2022 (2022-04-13), pages 8977-8987, XP011921627, ISSN: 1551-3203, DOI: 10.1109/TII.2022.3167478 discloses a federated learning (FL) framework that allows edge devices to train an anomaly detection model in collaboration with the cloud without compromising privacy.

YI LIU ET AL: "A Systematic Literature Review on Federated Learning: From A Model Quality Perspective", D3 ARXIV.ORG, CORNELL UNIVERSITY LIBRARY, 201 OLIN LIBRARY CORNELL UNIVERSITY ITHACA, NY 14853, 1 December 2020 (2020-12-01), XP081828970 reviews and objectively analyses the approaches to improving the quality of federated models.

ZHANG WEI ET AL: "Federated learning for machinery fault diagnosis with dynamic validation and self-supervision", KNOWLEDGE-BASED SYSTEMS, ELSEVIER, AMSTERDAM, NL, vol. 213, 24 December 2020 (2020-12-24), XP086464244, ISSN: 0950-7051, DOI: 10.1016/J.KNOSYS.2020.106679 discloses a federated learning method for machinery fault diagnosis. Model training is locally implemented within each participated client, and a self-supervised learning scheme is proposed to enhance the learning performance.

One approach to generalize a machine learning model to unseen out-of-domain data is to train the ML model on data from different manufacturing conditions, e.g., different machine types. This would allow to directly use this ML model on unseen data collected by unknown machine types without requiring any labelling or retraining. The problem here is, that data owners, e.g., manufacturing companies are unwilling to share their data in order to preserve data-privacy and know-how, and possibly prevent reverse engineering. Such an approach accelerates the development of ML models, but usually requires high volume of data transferred to the different data sources.

Therefore, it is the object of the present application to train a ML model for at least one manufacturing scenario of different manufacturing scenarios with a small dataset of labelled data and of differing data distribution in a fast and low memory consuming way while preserving the data-privacy.

This object is solved by the features of the independent claims. The dependent claims contain further developments of the invention.

A first aspect concerns a computer-implemented method for providing a trained classification model for a classification task in a production process for manufacturing at least one workpiece and/or product as specified in claim 1.

The several local production processes are production processes which are different in one or few of the following process conditions: using different machine types, using the same machine type but from different machine manufacturers, different wear of the tooling of the machines, environmental differences in different production sites, manufacturing a different workpiece or changes in the manufacturing process. The small, insufficient amount data in each of the process-specific datasets is enhanced by additional synthetic local datasets generated by the generative model. This leads to a higher performance of the classification model in the optimization step. By aggregating all the local generative models, the aggregated central generative model is trained to provide domain/process-agnostic synthetic data, which trains the classification model to better adapt to changing collected dataset during the production process. The generative model is optimized in a way, that its synthetic data will be recognized by all local production processes. Further, each process-specific dataset contributes to the training of all local classification models but remains in its local server. In total, the method improves the efficiency of training and the performance of the central classification and all the local classification models while protecting the data-privacy of each local server.

In an embodiment the optimizing step is performed iteratively applying the current local classification model and the current local generative model as copy of the central classification model and as copy of the central generative model.

Thus, the local classification model and local generative model are adapted and optimized for the local production process, i.e., to provide process-specific classification results and to generate synthetic datasets similar to the "original" process-specific dataset.

In a further embodiment the copy of the central generative models and local generative models are optimized to generate images or feature maps of images from a randomly initialized vector.

This increases the diversity of the generated images or feature maps.

In an embodiment each classification model consists of a feature extractor and a classifier, and wherein the feature extractor inputs an image and outputs a feature map, and wherein the classifier inputs a feature map and outputs a class probability.

In an embodiment the process-specific dataset of each local production process are private data, and the owner of the local production process stores the private data on its local server, and the private data are not transferred to the central server.

This secures data-privacy.

In an embodiment the original classification model and/or the original generative model are deep learning models.

According to the invention the copy of the central generative model is optimized by minimizing the error of the classification model when applying the synthetic local dataset.

Such, the local generative model is trained to generate synthetic data for the local production process. Using the optimized synthetic local dataset during the optimization of the local classification model accelerates the performance and consequently also the training of the local classification model.

According to the invention the central and local generative model generate feature embeddings and output them as synthetic local dataset for optimizing the copy of the central classification model.

The Feature embedding is data with reduced dimension compared to the feature which is originally encoded in the datapoint. The feature embedding provides the most relevant information of the feature. Therefore, the optimizing the local classification model with feature embeddings enhances the performance in on optimization step and less optimization steps are required to meet the termination criterion. The training of the local classification model is reached faster.

In a further embodiment the aggregating in step d. is performed by averaging parameters of all local classification models and averaging parameters of all the current local generative models into the aggregated central classification model and central generative model.

This provides an aggregated central classification model and central generative model which is equally balanced with respect to the contributing local production processes. The aggregated central classification model provides a good performance also applied in a new production process different to all of the local production processes.

In an embodiment the feature of the datapoint comprises information of a feature map of an image of the production process.

The feature of a datapoint comprises a set of parameters measured on at least one machine performing the production process or a set of parameters measured on at least one workpiece and/or product manufactured by the production process. The feature can also be an image. In this case, the feature map of an image provides the information

which is most distinguishing for object on the image. Datapoints comprising only the information of a feature map is of reduced volume compared to a dataset encoding the complete image.

In an embodiment the process-specific dataset of each local production process is private data, and the private data is not transferred to the central server.

In an embodiment the production processes are one of an additive manufacturing process or a milling process, and the classification task is one of anomaly detection, failure classification, condition monitoring of a machine in the production process, or a quality control, product sorting of the workpiece and/or product manufactured in the production processes.

A second aspect concerns a Computer-Implemented method for performing a classification task in at least one of several local production process for manufacturing at least one workpiece and/or product, comprising:

- collecting sensor data measured by sensors monitoring the production process while operation and manufacturing at least one workpiece and/or product,
- inputting the collected sensor data into a current local classification model of a last iteration trained as described above,
- outputting a classification result by the current local classification model indicating a classification result of the classification task of the local production.

The current local classification model shows high performance without significant adaption and training due to the method of its training.

A third aspect concerns a system for providing a trained classification model for a classification task in a production process for manufacturing at least one workpiece and/or product as specified in claim 10.

A fourth aspect concerns a computer program product directly loadable into the internal memory of a digital computer, comprising software code portions for performing the steps as described before, when said product is run on said digital computer.

The computer program product can be provided by a computerreadable memory medium having computer program instructions stored thereon, which perform the steps of the method according to the preceding claims when executed by a processor.

The invention will be explained in more detail by reference to accompanying figures. Similar objects will be marked by the same reference signs.

Figure 1 schematically illustrates an embodiment of the inventive system.

Figure 2 shows an embodiment of the inventive method for providing a trained classification model illustrated by a schematic information flow diagram.

Figure 3 shows an embodiment of the inventive method for controlling a production process illustrated by a schematic information flow diagram.

It is noted that in the following detailed description of embodiments, the accompanying drawings are only schematic, and the illustrated elements are not necessarily shown to scale. Rather, the drawings are intended to illustrate functions and the co-operation of components. Here, it is to be understood that any connection or coupling of functional blocks, devices, components or other physical or functional elements could also be implemented by an indirect connection or coupling, e.g., via one or more intermediate elements. A connection or a coupling of elements or components or nodes can for example be implemented by a wire-based, a wireless connection and/or a combination of a wire-based and a wireless connection. Functional units can be implemented by dedicated hardware, e.g., processor or firmware, and/or by a combination of dedicated hardware and firmware and software. It is further noted that each functional step of the method can be performed at a functional unit on the related system.

In industrial manufacturing, there exists a high diversity of manufacturing scenarios. E.g., in production processes producing the same product, there exist different machine types from different manufacturers that can be used, or different tools of the machine are used, or a variation of products are produced, to name a few. For each of these production processes only a small set of data is available, which is collected during operation of the local production process and annotated with respect to a certain classification. To training a ML model for performing a classification task, e.g., for anomaly detection, failure classification of a machine or of the product manufactured by the process a much larger volume of annotated data is required. Even more, there are different stakeholders, like a product process owner, a machine manufacturer or a service provider which are not are unwilling to share their data.

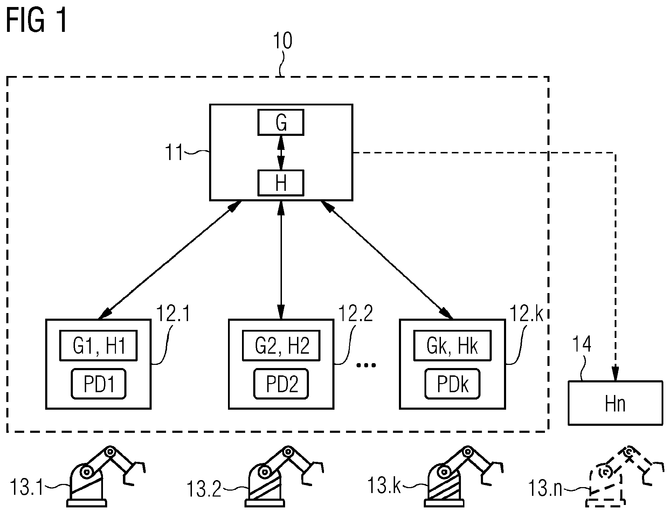

Fig. 1 shows such a scenario with more than one local production processes 13.1, 13.2, 13.k and an embodiment of a system 10 for providing a trained classification model for a classification task in at least one of the local production

processes. The local production processes 13.1, 13.2, 13.k manufacture at least one workpiece and/or product.

The system 10 comprises one central server 11 and several local servers 12.1, 12.2, 12.k. Each of the local servers 12.1, 12.2, 12.k comprises a data interface to communicate with the central server 10 and a storage unit that stores a process-specific dataset PD1, PD2, PDk collected at the respective local production process 13.1, 13.2, 13.k. The process-specific dataset PD1, PD2, PDk of each local production process 13.1, 13.2, 13.k is private data, i.e., owned by different customers, and the private data as such is not transferred to the central server 11 throughout the method steps performed by the system.

The process-specific dataset PD1, PD2, PDk are sensor data recorded over time by sensors measuring physical parameters, e.g., torque, rotation speed, temperature, pressure, voltage or image data captured by a camera from the work piece or a machine during the local production process 13.1, 13.2, 13.k. A datapoint of the dataset comprises a feature and a label assigned to the feature. The feature comprises a set of different sensor data measured at a certain point in time in the local production process 13.1, 13.2, 13.k. The label indicates a class characterizing the production process, e.g., a machine in the production process, or a workpiece or product manufactured by the production process. The classification task which shall be performed by the machine learning method can be a dual-class classification task, like anomaly detection with two classes indicating either for normal mode or failure mode, or a multi-class classification tasks like failure classification or condition monitoring. Labelling or labelled data is used as synonym for annotating or annotated data in this description.

The local production processes 13.1, 13.2, 13.k as well as a production process 13.n are preferably one of an additive manufacturing process or a milling process. The classification task is one of anomaly detection, failure classification, condition monitoring of a machine in the production process, or a quality control, product sorting of the workpiece and/or product manufactured in the production processes.

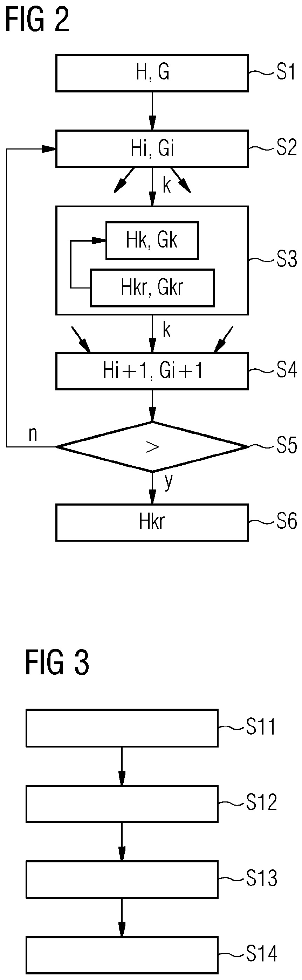

The system 10 is configured to provide a trained classification model for at least one up to all of the local production processes 13.1, 13.2, 13.k according to following embodiment of proposed method. The method illustrated in Figure 2 and described below.

In a first step S1, a central classification model H and a central generative model G are generated and randomly initialized on a central server 11. Preferably, the classification model H and the central generative model Gare deep learning models. The classification model H can be split into a feature extractor F_k, which e.g., inputs an image and outputs a feature map, and a classifier C_k, which inputs a feature map and outputs a class probability.

In the next step S2, a copy Hi of the central classification model H and a copy Gi of the central generative model G is transferred to several local servers indicated by the arrows in Fig.2. In the system 10 shown in Fig.1, each of the local servers 12.1, 12.2, 12.k received such copies indicated by G1,H1, G2,H2 and Gk,Hk.

In step S3, at each of the local servers 12.1, 12.2, 12.k the copy Hi of the central classification model is optimized depending on a subset of the respective process-specific dataset PD1, PD2, PDk and a synthetic local dataset generated by the copy Gi of the central generative model G resulting in a current local classification model Hkr. The copy Gi of the central generative model is optimized depending on the synthetic local dataset resulting in a current local generative model Gkr. Fig.2 exemplarily shows the steps performed at local server 12.k. In an embodiment the copy Gk of the central generative model is optimized by minimizing the error of the classification model Hk when applying the synthetic local dataset. Preferably, the optimizing step S3 is performed several times, i.e., in rounds applying the resulting current local classification model Hkr and the resulting current local generative model Gkr as starting point. The central Gi and local generative model Gk generate feature embeddings and output them as synthetic local dataset for optimizing the copy of the central classification model. In an embodiment the current generative model Gk is optimized to generate images or feature maps of images from a randomly initialized vector.

In step 4, the central server 11 receives a copy of the current local classification models H1r, H2r, Hkr from each local server 12.1, 12.2, 12.k and aggregates them securely into an aggregated central classification model Hi+1 and an aggregated central generative model Gi+1. In an embodiment the aggregating is performed by averaging parameters of all local classification models H1r, H2r, Hkr and averaging parameters of all the current local generative models G1r, G2r, Gkr into the aggregated central classification model Hi+1 and central generative model Gi+1.

In step S5 the aggregated central classification model Hi+1 and the aggregated central generative model Gi+1 is checked with respect to a termination criterion, e.g., a predefined number of iterations, a predefined duration, or a predefined convergence criterion. If the termination criterion is not met, the aggregated central classification model Hi+1 and aggregated central generative model Gi+1 is applied as central classification model Hi and central generative model Gi and steps S2 to S5 are repeatedly performed.

If the termination criterion is matched, the current local classification model Hki+1 of the last iteration is output and used for the classification task in the production process 13.k of the respective local server 12.k.

The current local classification model Hki+1 of the last iteration is output and applied as trained model in multiple manufacturing scenarios, e.g., defects detection on the product surface of 3D printing/additive manufacturing. Here, the types of the defect are normally predefined and distributed among local production processes. However, the collected images may vary in appearance due to the production setups, e.g., different camera configurations or different material

types, leading to image appearance deviation. Also, the described method is applicable for non-vision tasks, e.g., time-series temperature monitoring with sensors, where the installation position of sensor in different clients could cause input data characteristic deviation.

Below the method is provided in pseudo code.

**Algorithm 1: Training procedure for personalized federated learning under cross-domain data**

```
Input:   N: Number of total training iterations,
         N_local: Number of local training iterations at each client,
         K: Set of clients
Output:  {F_k}_{k=1}^K: Set of local models for all clients
Initialize a classification model H, a generative model G at server
Send a copy of H and G to each client
for i ← 0 to N do
  if i mod N_local = 0 && i > 0 then
      Securely aggregate local models H_k and G_k from each client k
      Update server model H and G via averaging all local models
      Send a copy of H and G to each client
  end
  for each client k in K do
      Sample one batch of data (X, y) from local dataset D_k
      Generate one batch of data (f̂, ŷ) using local generator G_k
      Update local classification model H_k
      Update local generator G_k
  end
end
```

Applying the trained classification model, i.e., performing a classification task in at least one of several local production process for manufacturing at least one workpiece and/or product is performed as shown in Fig.3.

In a first step S11, at each of the several production processes 12.1, 12.2, 12.k sensor data are collected in the production process while operation. The collected sensor data are input into a current local classification model Hki+1 of the last iteration trained according to above-described method, see step 12. The current local classification model Hki+1 outputs a classification result, see step S13, by indicating the classification task of a local production. In last step S14, the local production process is controlled depending on the classification result. As example, the settings of a machine in the local production machine are adapted depending on the classification result or a product manufactured by the local production process is sorted depending on the classification result.

The trained classification model can be applied also to a new production process if the sensor data measured at the new production process contains the same features as the dataset the classification model was trained with.

It is to be understood that the above description of examples is intended to be illustrative and that the illustrated components are susceptible to various modifications. For example, the illustrated concepts could be applied for different technical systems and especially for different subtypes of the respective technical system with only minor adaptions.

## Claims

1. Computer-implemented method for providing a trained classification model for a classification task in a production process for manufacturing at least one workpiece and/or product, comprising:

   a. generating (S1) and randomly initializing a central classification model (H, Hi) and a central generative model (G, Gi) on a central server (11),
   b. transferring (S2) a copy of the central classification model (H) and a copy of the central generative model (G, Gi) to several local servers (12.1, 12.2, 12.k), wherein each local server stores (12.1, 12.2, 12.k) a process-specific dataset (PD1, PD2, PDk) collected at a local production process (13.1, 13.2, 13.k), and the process-specific datasets (PD1, PD2, PDk) having different data distributions, wherein the process-specific dataset (PD1, PD2, PDk) are sensor data recorded over time by sensors measuring physical parameters or image data captured by a camera during the local production process (13.1, 13.2, 13.k) and a label indicating a class characterizing the production process (13.1, 13.2, 13.k),
   c. at each of the local servers (12.1, 12.2, 12.k),

      - optimizing (S3) the copy (Hk) of the central classification model depending on a subset of the process-specific dataset (PDk) and a synthetic local dataset resulting in a current local classification model (Hkr), wherein the synthetic local dataset is generated by the copy (Gk) of the central generative model, wherein the central and local generative model (G, Gi) generate feature embeddings and output them as synthetic local dataset for optimizing the copy of the central classification model (H, Hi), and
      - optimizing the copy of the central generative model (Gk) depending on the synthetic local dataset resulting in a current local generative model (Gkr), wherein the copy (Gk) of the central generative model is optimized by minimizing the error of the classification model (Hk) when applying the synthetic local dataset,

   d. updating (S4), at the central server (11), the central classification model (H, Hi) and the central generative model (G, Gi) by aggregating all current local classification models (Hkr) and by aggregating all current local generative models (Gkr) received from the local servers (12.1, 12.2, 12.k) resulting in an aggregated central classification model (Hi+1) and an aggregated central generative model (Gi+1),
   e. iterating (S5) step b-d by applying the aggregated central classification model (Hi+1) and aggregated central generative model (Gi+1) as central classification model (H, Hi) and central generative model (H,Hi) until a terminating criterion is met,
   wherein the termination criterion is a predefined number of iterations, a predefined duration, or a predefined convergence criterion,
   f. providing (S6) the current local classification model (Hkr) of the last iteration as output and using it as trained classification model for the classification task in the production process of the respective local server (12.k).

2. Method according claim 1, wherein the optimizing step is performed iteratively applying the current local classification model (Hkr) and the current local generative model (Gkr) as copy of the central classification model (Hk) and the copy of the central generative model (Gk).

3. Method according claim 2, wherein the copy of the central generative models (H, Hi) and the copy of the local generative models (G, Gi) are optimized to generate images or feature maps of images from a randomly initialized vector.

4. Method according to any of the preceding claims, wherein each local classification model (Hk) consists of a feature extractor (F_k) and a classifier (C_k), and
   wherein the feature extractor (F_k) inputs an image and outputs a feature map, and wherein the classifier (C_k) inputs a feature map and outputs a class probability.

5. Method according to any of the preceding claims, wherein the process-specific dataset (PD1, PD2, PDk) of each local production process (12.1, 12.2, 12.k) are private data and the owner of the local production process (12.1, 12.2, 12.k) stores the private data on its local server, and the private data are not transferred to the central server (11).

6. Method according to any of the preceding claims, wherein the central classification model (H, Hi) and/or the central generative model (G, Gi) are deep learning models.

**7.** Method according to any of the preceding claims, wherein the aggregating in step d. is performed by averaging parameters of all local classification models (Hkr) and averaging parameters of all the current local generative models (Gkr) into the aggregated central classification model (Hi+1) and central generative model (Gi+1).

**8.** Method according to any of the preceding claims, wherein the local production processes (13.1, 13.2, 13.k) are one of an additive manufacturing process or a milling process, and the classification task is one of anomaly detection, failure classification, condition monitoring of a machine in the production process, or a quality control, product sorting of the workpiece and/or product manufactured in the production pro-cesses (13.1, 13.2, 13.k).

**9.** Computer-Implemented method for applying a classification task in at least one of several local production process for manufacturing at least one workpiece and/or product, comprising:

- collecting (S11) sensor data measured by sensors monitoring the production process while operation,
- inputting (S12) the collected sensor data into a current local classification model (Hki) of the last iteration trained according to claim 1-8,
- outputting (S13) a classification result by the current local classification model (Hki) of a local production process at the time the sensor data were measured, and
- controlling (S14) the local production process depending on the classification result.

**10.** System for providing a trained classification model for a classification task in a production process for manufacturing at least one workpiece and/or product, comprising a central server and several local servers configured to perform:

a. generating (S1) and randomly initializing a central classification model (H, Hi) and a central generative model (G, Gi) on a central server (11),
b. transferring (S2) a copy of the central classification model (H) and a copy of the central generative model (G, Gi) to several local servers (12.1, 12.2, 12.k), wherein each local server stores (12.1, 12.2, 12.k) a process-specific dataset (PD1, PD2, PDk) collected at a local production process (13.1, 13.2, 13.k), and the process-specific datasets (PD1, PD2, PDk) having different data distributions, wherein the process-specific dataset (PD1, PD2, PDk) are sensor data recorded over time by sensors measuring physical parameters or image data captured by a camera during the local production process (13.1, 13.2, 13.k) and a label indicating a class characterizing the production process (13.1, 13.2, 13.k),
c. at each of the local servers (12.1, 12.2, 12.k),

- optimizing (S3) the copy (Hk) of the central classification model depending on a subset of the process-specific dataset (PDk) and a synthetic local dataset resulting in a current local classification model (Hkr), wherein the synthetic local dataset is generated by the copy (Gk) of the central generative model, wherein the central and local generative model (G, Gi) generate feature embeddings and output them as synthetic local dataset for optimizing the copy of the central classification model (H, Hi), and
- optimizing the copy of the central generative model (Gk) de-pending on the synthetic local dataset resulting in a current local generative model (Gkr),
wherein the copy (Gk) of the central generative model is optimized by minimizing the error of the classification model (Hk) when applying the synthetic local dataset,

d. updating (S4), at the central server (11), the central classification model (H, Hi) and the central generative model (G, Gi) by aggregating all current local classification models (Hkr) and by aggregating all current local generative models (Gkr) received from the local servers (12.1, 12.2, 12.k) resulting in an aggregated central classification model (Hi+1) and an aggregated central generative model (Gi+1),
e. iterating (S5) step b-d by applying the aggregated central classification model (Hi+1) and aggregated central generative model (Gi+1) as central classification model (H, Hi) and central generative model (H,Hi) until a terminating criterion is met, wherein the termination criterion is a predefined number of iterations, a predefined duration, or a predefined convergence criterion,
f. providing (S6) the current local classification model (Hki+1) of the last iteration as output and using it as trained classification model for the classification task in the production process of the respective local server (12.k).

**11.** Computer program product which, when executed by a system comprising a central server and several local servers, causes the system to perform the method according to any of claims 1-8.

## Patentansprüche

1. Computergestütztes Verfahren zum Bereitstellen eines trainierten Klassifikationsmodells für eine Klassifikationsaufgabe in einem Produktionsprozess zum Fertigen mindestens eines Werkstücks und/oder Produkts, das Folgendes umfasst:

   a. Generieren (S1) und zufälliges Initialisieren eines zentralen Klassifikationsmodells (H, Hi) und eines zentralen generativen Modells (G, Gi) auf einem zentralen Server (11),
   b. Übertragen (S2) einer Kopie des zentralen Klassifikationsmodells (H) und einer Kopie des zentralen generativen Modells (G, Gi) an mehrere lokale Server (12.1, 12.2, 12.k), wobei jeder lokale Server (12.1, 12.2, 12.k) einen bei einem lokalen Produktionsprozess (13.1, 13.2, 13.k) gesammelten, prozessspezifischen Datensatz (PD1, PD2, PDk) speichert und die prozessspezifischen Datensätze (PD1, PD2, PDk) eine unterschiedliche Datenverteilung aufweisen, wobei es sich bei dem prozessspezifischen Datensatz (PD1, PD2, PDk) um Sensordaten, die über die Zeit von Sensoren aufgezeichnet werden, welche physikalische Parameter messen, oder Bilddaten, die von einer Kamera im Verlauf des lokalen Produktionsprozesses (13.1, 13.2, 13.k) aufgenommen werden, und eine Markierung handelt, die eine den Produktionsprozess (13.1, 13.2, 13.k) kennzeichnende Klasse angibt,
   c. auf jedem der lokalen Server (12.1, 12.2, 12.k):

      - Optimieren (S3) der Kopie (Hk) des zentralen Klassifikationsmodells in Abhängigkeit von einer Teilmenge des prozessspezifischen Datensatzes (PDk) und einem synthetischen lokalen Datensatz, wodurch ein aktuelles lokales Klassifikationsmodell (Hkr) entsteht, wobei der synthetische lokale Datensatz durch die Kopie (Gk) von dem zentralen generativen Modell generiert wird, wobei das zentrale und das lokale generative Modell (G, Gi) Merkmalseinbettungen generieren und diese als synthetischen lokalen Datensatz zum Optimieren der Kopie von dem zentralen Klassifikationsmodell (H, Hi) ausgeben, und
      - Optimieren der Kopie des zentralen generativen Modells (Gk) in Abhängigkeit von dem synthetischen lokalen Datensatz, wodurch ein aktuelles lokales generatives Modell (Gkr) entsteht,
      wobei die Kopie (Gk) des zentralen generativen Modells optimiert wird, indem der Fehler des Klassifikationsmodells (Hk) beim Anwenden des synthetischen lokalen Datensatzes minimiert wird,

   d. Aktualisieren (S4) des zentralen Klassifikationsmodells (H, Hi) und des zentralen generativen Modells (G, Gi) auf dem zentralen Server (11) durch Aggregieren aller aktuellen lokalen Klassifikationsmodelle (Hkr) und aller aktuellen lokalen generativen Modelle (Gkr), die von den lokalen Servern (12.1, 12.2, 12.k) empfangen wurden, wodurch ein aggregiertes zentrales Klassifikationsmodell (Hi+1) und ein aggregiertes zentrales generatives Modell (Gi+1) entsteht,
   e. Iterieren (S5) von Schritt b-d durch Anwenden des aggregierten zentralen Klassifikationsmodells (Hi+1) und des aggregierten zentralen generativen Modells (Gi+1) als zentrales Klassifikationsmodell (H, Hi) und zentrales generatives Modells (H, Hi), bis ein Abbruchkriterium erfüllt ist,
   wobei das Abbruchkriterium eine vorgegebene Anzahl von Iterationen, eine vorgegebene Dauer oder ein vorgegebenes Konvergenzkriterium ist,
   f. Bereitstellen (S6) des aktuellen lokalen Klassifikationsmodells (Hkr) der letzten Iteration als Ausgabe und Benutzen dieses Models als trainiertes Klassifikationsmodell für die Klassifikationsaufgabe im Produktionsprozess des jeweiligen lokalen Servers (12.k).

2. Verfahren nach Anspruch 1, wobei das Optimieren unter Anwendung des aktuellen lokalen Klassifikationsmodells (Hkr) und des aktuellen lokalen generativen Modells (Gkr) als Kopie des zentralen Klassifikationsmodells (Hk) und Kopie des zentralen generativen Modells (Gk) iterativ erfolgt.

3. Verfahren nach Anspruch 2, wobei die Kopie der zentralen generativen Modelle (H, Hi) und die Kopie der lokalen generativen Modelle (G, Gi) zwecks Generierens von Bildern oder Merkmalskarten von Bildern aus einem willkürlich initialisierten Vektor optimiert werden.

4. Verfahren nach einem der vorhergehenden Ansprüche, wobei jedes lokale Klassifikationsmodell (Hk) aus einem Merkmalsextraktor (F_k) und einem Klassifikator (C_k) besteht und
   wobei der Merkmalsextraktor (F_k) ein Bild eingibt und eine Merkmalskarte ausgibt und der Klassifizierer (C_k) eine Merkmalskarte eingibt und eine Klassenwahrscheinlichkeit ausgibt.

5. Verfahren nach einem der vorhergehenden Ansprüche, wobei es sich bei dem prozessspezifischen Datensatz (PD1,

PD2, PDk) für jeden lokalen Produktionsprozess (12.1, 12.2, 12.k) um Privatdaten handelt und der Eigentümer des lokalen Produktionsprozesses (12.1, 12.2, 12.k) die Privatdaten auf seinem lokalen Server speichert und die Privatdaten nicht zum zentralen Server (11) übertragen werden.

**6.** Verfahren nach einem der vorhergehenden Ansprüche, wobei es sich bei dem zentralen Klassifikationsmodell (H, Hi) und/oder dem zentralen generativen Modell (G, Gi) um Deep-Learning-Modelle handelt.

**7.** Verfahren nach einem der vorhergehenden Ansprüche, wobei das Aggregieren bei Schritt d. durch Mittelwertbildung für Parameter aller lokalen Klassifikationsmodelle (Hkr) und Mittelwertbildung für Parameter aller aktuellen lokalen generativen Modelle (Gkr) im aggregierten zentralen Klassifikationsmodell (Hi+1) und zentralen generativen Modell (Gi+1) erfolgt.

**8.** Verfahren nach einem der vorhergehenden Ansprüche, wobei es sich bei den lokalen Produktionsprozessen (13.1, 13.2, 13.k) um einen additiven Fertigungsprozess oder einen Fräsprozess handelt und bei der Klassifikationsaufgabe um eine Anomalieerkennung, eine Fehlerklassifikation, eine Zustandsüberwachung einer Maschine in dem Produktionsprozess oder eine Qualitätskontrolle, Produktsortierung des in den Produktionsprozessen (13.1, 13.2, 13.k) gefertigten Werkstücks und/oder Produkts.

**9.** Computergestütztes Verfahren zum Anwenden einer Klassifikationsaufgabe in mindestens einem von mehreren lokalen Produktionsprozessen zum Fertigen mindestens eines Werkstücks und/oder Produkts, das Folgendes umfasst:

- Sammeln (S11) von Sensordaten, die von Sensoren gemessen werden, welche den Produktionsprozess im Betrieb überwachen,
- Eingeben (S12) der gesammelten Sensordaten in ein aktuelles lokales Klassifikationsmodell (Hki) der letzten Iteration, das gemäß Anspruch 1-8 trainiert wurde,
- Ausgeben (S13) eines Klassifikationsergebnisses durch das aktuelle lokale Klassifikationsmodell (Hki) für einen lokalen Produktionsprozess zu dem Zeitpunkt, zu dem die Sensordaten gemessen wurden, und
- Steuern (S14) des lokalen Produktionsprozesses in Abhängigkeit von dem Klassifikationsergebnis.

**10.** System zum Bereitstellen eines trainierten Klassifikationsmodells für eine Klassifikationsaufgabe in einem Produktionsprozess zum Fertigen mindestens eines Werkstücks und/oder Produkts, das einen zentralen Server und mehrere lokale Server umfasst, die so konfiguriert sind, dass sie Folgendes durchführen:

a. Generieren (S1) und zufälliges Initialisieren eines zentralen Klassifikationsmodells (H, Hi) und eines zentralen generativen Modells (G, Gi) auf einem zentralen Server (11),
b. Übertragen (S2) einer Kopie des zentralen Klassifikationsmodells (H) und einer Kopie des zentralen generativen Modells (G, Gi) an mehrere lokale Server (12.1, 12.2, 12.k), wobei jeder lokale Server (12.1, 12.2, 12.k) einen bei einem lokalen Produktionsprozess (13.1, 13.2, 13.k) gesammelten, prozessspezifischen Datensatz (PD1, PD2, PDk) speichert und die prozessspezifischen Datensätze (PD1, PD2, PDk) eine unterschiedliche Datenverteilung aufweisen, wobei es sich bei dem prozessspezifischen Datensatz (PD1, PD2, PDk) um Sensordaten, die über die Zeit von Sensoren aufgezeichnet werden, welche physikalische Parameter messen, oder Bilddaten, die von einer Kamera im Verlauf des lokalen Produktionsprozesses (13.1, 13.2, 13.k) aufgenommen werden, und eine Markierung handelt, die eine den Produktionsprozess (13.1, 13.2, 13.k) kennzeichnende Klasse angibt,
c. auf jedem der lokalen Server (12.1, 12.2, 12.k):

- Optimieren (S3) der Kopie (Hk) des zentralen Klassifikationsmodells in Abhängigkeit von einer Teilmenge des prozessspezifischen Datensatzes (PDk) und einem synthetischen lokalen Datensatz, wodurch ein aktuelles lokales Klassifikationsmodell (Hkr) entsteht,
wobei der synthetische lokale Datensatz durch die Kopie (Gk) von dem zentralen generativen Modell generiert wird, wobei das zentrale und das lokale generative Modell (G, Gi) Merkmalseinbettungen generieren und diese als synthetischen lokalen Datensatz zum Optimieren der Kopie von dem zentralen Klassifikationsmodell (H, Hi) ausgeben, und
- Optimieren der Kopie des zentralen generativen Modells (Gk) in Abhängigkeit von dem synthetischen lokalen Datensatz, wodurch ein aktuelles lokales generatives Modell (Gkr) entsteht,
wobei die Kopie (Gk) des zentralen generativen Modells optimiert wird, indem der Fehler des Klassifikationsmodells (Hk) beim Anwenden des synthetischen lokalen Datensatzes minimiert wird,

d. Aktualisieren (S4) des zentralen Klassifikationsmodells (H, Hi) und des zentralen generativen Modells (G, Gi) auf dem zentralen Server (11) durch Aggregieren aller aktuellen lokalen Klassifikationsmodelle (Hkr) und aller aktuellen lokalen generativen Modelle (Gkr), die von den lokalen Servern (12.1, 12.2, 12.k) empfangen wurden, wodurch ein aggregiertes zentrales Klassifikationsmodell (Hi+1) und ein aggregiertes zentrales generatives Modell (Gi+1) entsteht,
e. Iterieren (S5) von Schritt b-d durch Anwenden des aggregierten zentralen Klassifikationsmodells (Hi+1) und des aggregierten zentralen generativen Modells (Gi+1) als zentrales Klassifikationsmodell (H, Hi) und zentrales generatives Modells (H, Hi), bis ein Abbruchkriterium erfüllt ist,
wobei das Abbruchkriterium eine vorgegebene Anzahl von Iterationen, eine vorgegebene Dauer oder ein vorgegebenes Konvergenzkriterium ist,
f. Bereitstellen (S6) des aktuellen lokalen Klassifikationsmodells (Hki+1) der letzten Iteration als Ausgabe und Benutzen dieses Models als trainiertes Klassifikationsmodell für die Klassifikationsaufgabe im Produktionsprozess des jeweiligen lokalen Servers (12.k).

**11.** Computerprogrammprodukt, das, wenn es von einem System mit einem zentralen Server und mehreren lokalen Servern ausgeführt wird, das System dazu veranlasst, das Verfahren nach einem der Ansprüche 1-8 durchzuführen.

## Revendications

**1.** Procédé mis en œuvre par ordinateur pour la fourniture d'un modèle de classification entraîné pour une tâche de classification dans un processus de production pour la fabrication d'au moins une pièce et/ou un produit, comprenant :

a. la génération (S1) et l'initialisation de manière aléatoire d'un modèle de classification central (H, Hi) et d'un modèle génératif central (G, Gi) sur un serveur central (11),
b. le transfert (S2) d'une copie du modèle de classification central (H) et d'une copie du modèle génératif central (G, Gi) à plusieurs serveurs locaux (12.1, 12.2, 12.k), dans lequel chaque serveur local stocke (12.1, 12.2, 12.k) un ensemble de données spécifique à un processus (PD1, PD2, PDk) collecté au niveau d'un processus de production local (13.1, 13.2, 13.k), et les ensembles de données spécifiques à un processus (PD1, PD2, PDk) ayant des distributions de données différentes, dans lequel l'ensemble de données spécifique à un processus (PD1, PD2, PDk) est constitué de données de capteur enregistrées au cours du temps par des capteurs mesurant des paramètres physiques ou de données d'image capturées par un appareil de prise de vues pendant le processus de production local (13.1, 13.2, 13.k) et d'une étiquette indiquant une classe caractérisant le processus de production (13.1, 13.2, 13.k),
c. au niveau de chacun des serveurs locaux (12.1, 12.2, 12.k),

- l'optimisation (S3) de la copie (Hk) du modèle de classification central en fonction d'un sous-ensemble de l'ensemble de données spécifique à un processus (PDk) et d'un ensemble de données local synthétique résultant en un modèle de classification local actuel (Hkr), dans lequel l'ensemble de données local synthétique est généré par la copie (Gk) du modèle génératif central, dans lequel les modèles génératifs central et local (G, Gi) génèrent des plongements de caractéristiques et les délivrent en sortie sous la forme d'un ensemble de données local synthétique pour l'optimisation de la copie du modèle de classification central (H, Hi), et
- l'optimisation de la copie du modèle génératif central (Gk) en fonction de l'ensemble de données local synthétique résultant en un modèle génératif local actuel (Gkr), dans lequel la copie (Gk) du modèle génératif central est optimisée en rendant minimale l'erreur du modèle de classification (Hk) lors de l'application de l'ensemble de données local synthétique,

d. la mise à jour (S4), au niveau du serveur central (11), du modèle de classification central (H, Hi) et du modèle génératif central (G, Gi) en agrégeant tous les modèles de classification locaux actuels (Hkr) et en agrégeant tous les modèles génératifs locaux actuels (Gkr) reçus en provenance des serveurs locaux (12.1, 12,2, 12.k) résultant en un modèle de classification central agrégé (Hi+1) et un modèle génératif central agrégé (Gi+1),
e. l'itération (S5) des étapes b à d en appliquant le modèle de classification central agrégé (Hi+1) et le modèle génératif central agrégé (Gi+1) comme modèle de classification central (H, Hi) et modèle génératif central (H, Hi) jusqu'à ce qu'un critère de terminaison soit satisfait, dans lequel le critère de terminaison est un nombre d'itérations prédéfini, une durée prédéfinie ou un critère de convergence prédéfini,
f. la fourniture (S6) du modèle de classification local actuel (Hkr) de la dernière itération en sortie et l'utilisation de

celui-ci comme modèle de classification entraîné pour la tâche de classification dans le processus de production du serveur local (12.k) respectif.

2. Procédé selon la revendication 1, dans lequel l'étape d'optimisation est réalisée de manière itérative en appliquant le modèle de classification local actuel (Hkr) et le modèle génératif local actuel (Gkr) comme copie du modèle de classification central (Hk) et copie du modèle génératif central (Gk).

3. Procédé selon la revendication 2, dans lequel la copie des modèles génératifs centraux (H, Hi) et la copie des modèles génératifs locaux (G, Gi) sont optimisées pour générer des images ou des cartes de caractéristiques d'images à partir d'un vecteur initialisé de manière aléatoire.

4. Procédé selon l'une quelconque des revendications précédentes, dans lequel chaque modèle de classification local (Hk) est constitué d'un extracteur de caractéristiques (F_k) et d'un classificateur (C_k), et dans lequel l'extracteur de caractéristiques (F_k) entre une image et délivre en sortie une carte de caractéristiques, et dans lequel le classificateur (C_k) entre une carte de caractéristiques et délivre en sortie une probabilité de classe.

5. Procédé selon l'une quelconque des revendications précédentes, dans lequel l'ensemble de données spécifique à un processus (PD1, PD2, PDk) de chaque processus de production local (12.1, 12.2, 12.k) est constitué de données privées et le propriétaire du processus de production local (12.1, 12.2, 12.k) stocke les données privées sur son serveur local, et les données privées ne sont pas transférées au serveur central (11).

6. Procédé selon l'une quelconque des revendications précédentes, dans lequel le modèle de classification central (H, Hi) et/ou le modèle génératif central (G, Gi) sont des modèles d'apprentissage profond.

7. Procédé selon l'une quelconque des revendications précédentes, dans lequel l'agrégation à l'étape d. est réalisée en calculant la moyenne de paramètres de tous les modèles de classification locaux (Hkr) et en calculant la moyenne de paramètres de tous les modèles génératifs locaux actuels (Gkr) vers le modèle de classification central agrégé (Hi+1) et le modèle génératif central (Gi+1).

8. Procédé selon l'une quelconque des revendications précédentes, dans lequel les processus de production locaux (13.1, 13.2, 13.k) sont l'un parmi un processus de fabrication additive ou un processus d'usinage, et la tâche de classification est l'une parmi une détection d'anomalie, une classification de panne, une surveillance d'état d'une machine dans le processus de production ou de contrôle qualité, un tri des produits de la pièce et/ou du produit fabriqué(e) selon les processus de production (13.1, 13.2, 13.k).

9. Procédé mis en œuvre par ordinateur pour l'application d'une tâche de classification dans au moins l'un parmi plusieurs processus de production locaux pour la fabrication d'au moins une pièce et/ou un produit, comprenant :

- la collecte (S11) de données de capteur mesurées par des capteurs surveillant le processus de production pendant le fonctionnement,
- l'entrée (S12) des données de capteur collectées dans un modèle de classification local actuel (Hki) de la dernière itération entrainée selon les revendications 1 à 8,
- la sortie (S13) d'un résultat de classification par le modèle de classification local actuel (Hki) d'un processus de production local au moment auquel les données de capteur ont été mesurées, et
- la commande (S14) du processus de production local en fonction du résultat de classification.

10. Système pour la fourniture d'un modèle de classification entraîné pour une tâche de classification dans un processus de production pour la fabrication d'au moins une pièce et/ou un produit, comprenant un serveur central et plusieurs serveurs locaux configurés pour réaliser :

a. la génération (S1) et l'initialisation de manière aléatoire d'un modèle de classification central (H, Hi) et d'un modèle génératif central (G, Gi) sur un serveur central (11),
b. le transfert (S2) d'une copie du modèle de classification central (H) et d'une copie du modèle génératif central (G, Gi) à plusieurs serveurs locaux (12.1, 12,2, 12.k), dans lequel chaque serveur local stocke (12.1, 12.2, 12.k) un ensemble de données spécifique à un processus (PD1, PD2, PDk) collecté au niveau d'un processus de production local (13.1, 13.2, 13.k), et les ensembles de données spécifiques à un processus (PD1, PD2, PDk) ayant des distributions de données différentes, dans lequel l'ensemble de données spécifique à un processus (PD1, PD2, PDk) est constitué de données de capteur enregistrées au cours du temps par des capteurs mesurant

des paramètres physiques ou de données d'image capturées par un appareil de prise de vues pendant le processus de production local (13.1, 13.2, 13.k) et d'une étiquette indiquant une classe caractérisant le processus de production (13.1, 13.2, 13.k),

c. au niveau de chacun des serveurs locaux (12.1, 12.2, 12.k),

- l'optimisation (S3) de la copie (Hk) du modèle de classification central en fonction d'un sous-ensemble de l'ensemble de données spécifique à un processus (PDk) et d'un ensemble de données local synthétique résultant en un modèle de classification local actuel (Hkr), dans lequel l'ensemble de données local synthétique est généré par la copie (Gk) du modèle génératif central, dans lequel les modèles génératifs central et local (G, Gi) génèrent des plongements de caractéristiques et les délivrent en sortie sous la forme d'un ensemble de données local synthétique pour l'optimisation de la copie du modèle de classification central (H, Hi), et
- l'optimisation de la copie du modèle génératif central (Gk) en fonction de l'ensemble de données local synthétique résultant en un modèle génératif local actuel (Gkr), dans lequel la copie (Gk) du modèle génératif central est optimisée en rendant minimale l'erreur du modèle de classification (Hk) lors de l'application de l'ensemble de données local synthétique,

d. la mise à jour (S4), au niveau du serveur central (11), du modèle de classification central (H, Hi) et du modèle génératif central (G, Gi) en agrégeant tous les modèles de classification locaux actuels (Hkr) et en agrégeant tous les modèles génératifs locaux actuels (Gkr) reçus en provenance des serveurs locaux (12.1, 12,2, 12.k) résultant en un modèle de classification central agrégé (Hi+1) et un modèle génératif central agrégé (Gi+1),

e. l'itération (S5) des étapes b à d en appliquant le modèle de classification central agrégé (Hi+1) et le modèle génératif central agrégé (Gi+1) comme modèle de classification central (H, Hi) et modèle génératif central (H, Hi) jusqu'à ce qu'un critère de terminaison soit satisfait, dans lequel le critère de terminaison est un nombre d'itérations prédéfini, une durée prédéfinie ou un critère de convergence prédéfini,

f. la fourniture (S6) du modèle de classification local actuel (Hk+1) de la dernière itération en sortie et l'utilisation de celui-ci comme modèle de classification entraîné pour la tâche de classification dans le processus de production du serveur local (12.k) respectif.

**11.** Produit de programme informatique qui, lorsqu'il est exécuté par un système comprenant un serveur central et plusieurs serveurs locaux, amène le système à réaliser le procédé selon l'une quelconque des revendications 1 à 8.

FIG 1

10
11
G
H
12.1
G1, H1
PD1
12.2
G2, H2
PD2
...
12.k
Gk, Hk
PDk
14
Hn
13.1
13.2
13.k
13.n

FIG 2

H, G
S1
Hi, Gi
S2
k
Hk, Gk
Hkr, Gkr
S3
k
Hi+1, Gi+1
S4
n
>
S5
y
Hkr
S6

FIG 3

S11
S12
S13
S14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2021177879 A1


### Non-patent literature cited in the description


- Privacy-Preserving Anomaly Detection in Cloud Manufacturing Via Federated Transformer. **MA SHIYAO et al.** IEEE TRANSACTIONS ON INDUSTRIAL INFORMATICS. IEEE SERVICE CENTER, 13 April 2022, vol. 18, 8977-8987
- A Systematic Literature Review on Federated Learning: From A Model Quality Perspective. **YI LIU et al.** D3 ARXIV.ORG, CORNELL UNIVERSITY LIBRARY. 01 December 2020
- Federated learning for machinery fault diagnosis with dynamic validation and self-supervision. **ZHANG WEI et al.** KNOWLEDGE-BASED SYSTEMS. ELSEVIER, 24 December 2020, vol. 213